# EUROPÄISCHE PATENTANMELDUNG

(11) **EP 3 572 385 A1**
(43) Veröffentlichungstag der Anmeldung: **27.11.2019**
(21) Anmeldenummer: 19175578.4
(22) Anmeldetag: 21.05.2019
(51) Int. Cl.: C03C 13/06

(54) **MINERALFASERZUSAMMENSETZUNG**

(30) Priorität: 22.05.2018 CH 6312018
(71) Anmelder: Sager AG, 5724 Dürrenäsch (CH)
(72) Erfinder: BROMBACHER, Volker, 5644 Auw (CH)
(74) Vertreter: Schaad, Balass, Menzl & Partner AG

(57) **Zusammenfassung**

Die vorliegende Erfindung betrifft eine fluorarme Mineralfaserzusammensetzung, die zerfaserbar und geeignet ist, sich in einem physiologischen Milieu aufzulösen. Sie weist die nachstehend aufgeführte chemische Zusammensetzung mit folgenden Gewichtsprozenten auf:

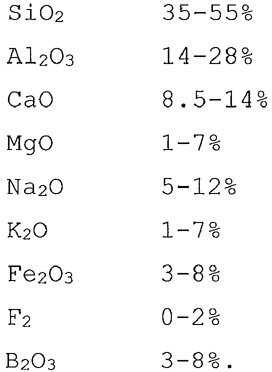

## Beschreibung

Die Erfindung betrifft eine fluorarme Mineralfaserzusammensetzung.

Die Verwendung von Mineralfasern als Material in unterschiedlicher Formgebung zur Wärmedämmung oder zum Brandschutz ist bekannt. Die Mineralfasern müssen eine Vielzahl von Eigenschaften aufweisen, um den heutigen Anforderungen gerecht zu werden. Hierzu sind nicht nur mechanische und thermische Eigenschaften, sondern auch toxikologische und umweltpolitische Aspekte relevant.

Die biologische Abbaubarkeit von Mineralfaserzusammensetzungen ist von grosser Bedeutung, weil einige Mineralfasern mit sehr kleinen Durchmessern (im Bereich von kleiner 3 µm) im Verdacht stehen, kanzerogen zu sein. Biologisch abbaubare Mineralfasern dagegen, das heisst, Mineralfasern, die sich in einem physiologischen Milieu schnell auflösen, haben jedoch dieses Problem nicht (Richtlinie 97/69 EG der Kommission vom 5. Dezember 1997).

In den letzten Jahren hat der Umweltschutzgedanke in der Öffentlichkeit einen immer höheren Stellenwert erlangt. Entsprechend müssen die Abgase beim Schmelzen der Gläser intensiv gereinigt werden, um die Umwelt mit diesen Emissionen nicht unnötig zu belasten und um die entsprechenden Gesetze einzuhalten. Dies hat einen erheblichen apparativen Aufwand mit den entsprechenden Kosten zur Folge.

Wesentlich ist ausserdem die Verarbeitungsart der Mineralfaserzusammensetzung. Mineralfasern werden beispielsweise in grossem Umfang zu Dämmzwecken eingesetzt. Insbesondere für diese Verwendung ist eine ausreichende Temperaturbeständigkeit der Mineralfasern notwendig. Eine effiziente und kosteneffektive Schmelze der Gemengekomponenten im Ofen oder in der Schmelzwanne für die Herstellung der Fasern aus der Schmelze erfordert, dass die chemische Zusammensetzung eine geeignete Liquidustemperatur (d.h. die Temperatur einer Schmelze, ab deren Unterschreitung das Gemenge aus einer homogenen flüssigen Phase zu erstarren beginnt) aufweist und während eines Zerfaserungsverfahrens eine geeignete Viskosität besitzen muss.

In EP 2 894 132 B1 wird eine Mineralfaserzusammensetzung offenbart, die sich zum einen unter physiologischen Bedingungen auflöst und zum anderen mit dem Schleuder-Blas-Verfahren sehr effizient herstellen lässt. Dabei wurde festgestellt, dass die Anwesenheit von Fluor in einem Bereich von 1 bis 5 Gewichtsprozent zum einen eine sehr günstige Kostenstruktur aufweist und zum anderen eine schnellere Erreichung der notwendigen Zerfaserungsviskosität bei tieferen Temperaturen ermöglicht. Allerdings neigen Fluor und fluorhaltige Verbindungen während des Schmelz- und Aufschmelzvorgangs zum Verdampfen. Die aus umweltpolitischen Gründen notwendige Fluorreinigung der Abgase ist äusserst komplex und kostenintensiv.

DE 2 351 105 offenbart eine fluorfreie Glaszusammensetzung bei welcher der gesamte Fluorgehalt durch Bariumoxid ersetzt wird. Dadurch wird aber die Temperatur, bei der die Silikatbildung beendet ist, erheblich erhöht und die Geschwindigkeit der Silikatbildung nimmt ab.

Aufgabe der vorliegenden Erfindung ist es daher, eine fluorarme oder fluorfreie Mineralstoffzusammensetzung bereitzustellen, die gleichzeitig ausgezeichnete mechanische und thermische Eigenschaften aufweist, aber auch die toxikologischen und umweltpolitischen Anforderungen erfüllt.

Die Aufgabe wird durch eine Mineralfaserzusammensetzung gemäss Anspruch 1 gelöst. Weitere bevorzugte Ausführungsformen sind Gegenstand der abhängigen Ansprüche.

Es wurde festgestellt, dass die erfindungsgemässe Mineralfaserzusammensetzung mit der nachstehend aufgeführten chemischen Zusammensetzung ausgezeichnete mechanische und thermische Eigenschaften aufweist und gleichzeitig die toxikologischen und umweltpolitischen Anforderungen erfüllt. Ausserdem ist die Mineralfaserzusammensetzung zerfaserbar und geeignet, sich in einem physiologischen Milieu aufzulösen. Unter dem Ausdruck «physiologisches Milieu» werden hier Bedingungen verstanden, die typischerweise in einem menschlichen Körper vorzufinden sind. Die Mineralfaserzusammensetzung weist die folgenden Gewichtsprozente auf:

| | |
|---|---|
| SiO₂ | 35-55% |
| Al₂O₃ | 14-28% |
| CaO | 8.5-14% |
| MgO | 1-7% |
| Na₂O | 5-12% |
| K₂O | 1-7% |
| Fe₂O₃ | 3-8% |
| F₂ | 0-2% |
| B₂O₃ | 3-8%. |

Die erfindungsgemässe Mineralfaserzusammensetzung weist eine Schmelztemperatur zwischen 1250°C und 1400°C auf und kann beispielsweise durch ein Schleuder-Blas-Verfahren hergestellt werden. Das Schleuder-Blas-Verfahren ist ein Herstellungsverfahren von Mineralfasern (Glasfasern Teschner, Roman Springer Verlag Heidelberg 2013). Wichtig für ein wirtschaftliches Schleuder-Blas-Verfahren ist, dass die Zerfaserungsviskosität bereits bei relativ tiefen Temperaturen erreicht wird, da einerseits weniger Energie für das Schmelzen der Rohstoffe notwendig ist und andererseits die Lebensdauer der Zerfaserungseinrichtung erhöht wird. Durch die erfindungsgemässe Zusammensetzung kann die notwendige Zerfaserungstemperatur (fiberising point: liegt typischerweise bei einem log η Wert von zwischen 2.5 und 3.5 dPas); bereits bei 1000°C bis 1200°C, vorzugsweise bei ca. 1050°C erreicht werden. Dabei wurde festgestellt, dass insbesondere der CaO und B₂O₃ Gehalt für diese Eigenschaft der Mineralfaserzusammensetzung wesentlich ist. Durch die tiefe Zerfaserungstemperatur der erfindungsgemässen Zusammensetzung ist eine kostengünstige wirtschaftliche Herstellung der Mineralfasern möglich.

Die Mineralfasern der erfindungsgemässen Mineralfaserzusammensetzung sind zerfaserbar und lösen sich in einem physiologischen Medium auf.

Vorzugsweise ist die erfindungsgemässe Mineralfaserzusammensetzung fluorfrei. Dadurch entfällt die aus umweltpolitischen Gründen notwendige Fluorreinigung der Abgase, die komplex und kostenintensiv ist. Überdies verlängert sich auch die Lebenszeit der Abgasapparaturen, da gasförmiges Fluor hochkorrodierend ist, was zu einer weiteren Kostensenkung führt. Überraschenderweise wurde festgestellt, dass die Zusammensetzung der Mineralfaserzusammensetzung trotz Abwesenheit von Fluor eine Zerfaserungstemperatur von 1200°C oder weniger aufweist. Dabei wurde festgestellt, dass mit einem CaO Gehalt von 8.5 bis 14 Gewichtsprozent, vorzugsweise von 9 bis 13 Gewichtsprozent, bereits bei tiefen Temperaturen die Geschwindigkeit der Silikatbildung erhöht werden kann. Gleichzeitig sorgt die Anwesenheit von B₂O₃ für ein besseres Einschmelzverhalten, wodurch das Fluor komplett ersetzt werden kann. Der B₂O₃ Gehalt beträgt vorzugsweise 3 bis 8 Gewichtsprozent, besonders bevorzugt 4 bis 7 Gewichtsprozent. Idealerweise wird als Rohstoff wenigstens 8 Gewichtsprozent, vorzugsweise wenigstens 10 Gewichtsprozent Borax für die Mineralfaserzusammensetzung eingesetzt, da Borax als Lieferant von B₂O₃ eingesetzt wird und das Weglassen von Flussspat ermöglicht.

Vorzugsweise enthält die erfindungsgemässe Mineralfaserzusammensetzung 0.1 bis 3 Gewichtsprozent TiO₂, da dadurch die Viskosität bei hohen Temperaturen erniedrigt und bei niedrigen Temperaturen erhöht wird. Insbesondere die Kombination von TiO₂ und B₂O₃ führt zu dem optimalen Schmelzverhalten der erfindungsgemässen Zusammensetzung. Vorzugsweise ist das Verhältnis von B₂O₃ zu TiO₂ zwischen 4:1 und 10:1, besonders bevorzugt zwischen 5:1 und 7:1.

In einer bevorzugten Ausführungsform weist die erfindungsgemässe Mineralfaserzusammensetzung folgende Zusammensetzung in Gewichtsprozenten auf:

| | |
|---|---|
| SiO₂ | 45-50% |
| Al₂O₃ | 15-20% |
| CaO | 8.5-12% |
| MgO | 1-4% |
| Na₂O | 7-10% |
| K₂O | 1-3% |
| Fe₂O₃ | 3-7% |
| B₂O₃ | 3-8%, |

wobei diese Mineralfaserzusammensetzung einen Fluorgehalt von 0 bis 2% aufweist, besonders bevorzugt jedoch fluorfrei ist. Eine solche Mineralfaserzusammensetzung ermöglicht eine Schmelzung der Rohstoffe bei Temperaturen von 1400° und eine Zerfaserung bei Temperaturen von 950°-1200°. Dies führt zu einer Standzeit und einer Lebensdauer der Spinnscheibe von bis zu 12 Tagen.

Vorzugsweise ist der Anteil an Alkali- und Erdalkalioxiden der erfindungsgemässen Mineralfaserzusammensetzung, wie beispielsweise Na₂O, K₂O, MgO und CaO wenigstens 18 Gewichtsprozent, vorzugsweise 20 Gewichtsprozent und am bevorzugtesten wenigstens 22 Gewichtsprozent, da solche Mineralfaserzusammensetzungen eine sehr gute Biolöslichkeit besitzen, was für das Auflösen in physiologischem Milieu von Vorteil ist.

Herkömmlichen Mineralfaserzusammensetzungen werden häufig noch weitere Zusatzstoffe wie beispielsweise Zinkoxid zugegeben. Es wurde nun festgestellt, dass auf die Zugabe von Zinkoxid vorzugsweise verzichtet werden kann. Beispielsweise kann die erfindungsgemässe Mineralfaserzusammensetzung einen Zinkoxidgehalt von weniger als 0.5 Gewichtsprozent aufweisen. Trotz Abwesenheit von Zinkoxid ist der Schmelzpunkt tief genug, dass die Glasschmelze effizient und wirtschaftlich verarbeitet werden kann. Zusätzlich werden die Produktionskosten signifikant gesenkt.

Die erfindungsgemässe Mineralfaserzusammensetzung kann vorzugsweise wenigstens 5 Gewichtsprozent, vorzugsweise wenigstens 8 Gewichtsprozent Hochofenschlacke als Rohstoffe enthalten. Die Hochofenschlacke dient als Quelle für SiO₂, Al₂O₃ und CaO. Durch die Verwendung von Hochofenschlacke als Rohstoff wird ein Abfallprodukt ökologisch sinnvoll wiederverwertet. Des Weiteren können durch den Einsatz von Hochofenschlacke die Kosten signifikant reduziert werden, da für das Einschmelzen weniger Energie benötigt wird als für das Einschmelzen der einzelnen Rohstoffe.

Vorzugsweise bestehen wenigstens 95% der Rohstoffe der erfindungsgemässen Mineralfaserzusammensetzung aus natürlich vorkommenden Rohmaterialien sowie Recyclingmaterialien. Als Recyclingmaterial kommen insbesondere Altglasscherben in Frage. Nebst dem positiven ökologischen Effekt ist hierbei zu erwähnen, dass sich der Einsatz von Altglasscherben, ähnlich dem Einsatz von Hochofenschlacke, positiv auf die Schmelztemperatur auswirkt, da für ihre Einschmelzung keine Wärmeenergie für den Abbau von Kristallgittern benötigt wird. Die Glasscherben werden vorzugsweise vor der Verwendung gemahlen, um eine Partikelgrösse von grösser als 2 mm zu erhalten. Vorzugsweise werden als Rohstoff wenigstens 15 Gewichtsprozent, vorzugsweise wenigstens 20% Glasscherben für die Mineralfaserzusammensetzung eingesetzt.

Der erfindungsgemässen Mineralfaserzusammensetzung können handelsübliche Läuterungsmittel zugesetzt werden. Aufgabe der Läuterung ist es, die Mineralfaserzusammensetzung blasenfrei zu machen. Gleichzeitig findet eine intensive Durchmischung und Homogenisierung des Glasflusses durch die Bewegung der auftretenden Blasen in der Schmelze statt. Ein übliches Läuterungsmittel ist Natriumsulfat, das jedoch im Vergleich zu den anderen Rohstoffen relativ teuer ist. Überraschenderweise wurde festgestellt, dass bei der erfindungsgemässen Mineralfaserzusammensetzung auf den Einsatz von Natriumsulfat verzichtet werden kann und trotzdem blasenfreie Mineralfasern erhalten werden.

Vorzugsweise wird die erfindungsgemässe Mineralfaserzusammensetzung durch ein Verfahren hergestellt, das folgende Schritte beinhaltet:
A) Bereitstellung einer Glasschmelze, die folgende Zusammensetzung in Gewichtsprozenten aufweist:

| | |
|---|---|
| SiO₂ | 35-55% |
| Al₂O₃ | 14-28% |
| CaO | 8.5-14% |
| MgO | 1-7% |
| Na₂O | 5-12% |
| K₂O | 1-7% |
| Fe₂O₃ | 3-8% |
| F₂ | 0-2% |
| B₂O₃ | 3-8% |

bei einer Temperatur von 1400°C;
B) Zuführen eines schmelzflüssigen Glasstrahls der unter Schritt A) erhaltenen Glasschmelze mit einer Temperatur von 1000-1150° zu dem rotierenden Teil einer kombinierten Schleuder-Blas-Anlage und Passieren eines Schleuderkorbs, der eine Temperatur von 900 - 1050° aufweist, wobei die erfindungsgemässen Mineralfasern erhalten werden.

Die erfindungsgemässe Mineralfaserzusammensetzung wird vorzugsweise zur Herstellung von thermischen und/oder akustischen Baumaterialien verwendet. Solche Baumaterialien werden beispielsweise im Hochbau, im Industriebau, im Fahrzeugbau und im Schiffbau verwendet. Die Mineralfasern können zu Formkörper in unterschiedlicher Formgebung verarbeitet werden, insbesondere in Form von Filzen, Matten, Rollen, Platten, Schalen, Streifen, Bahnen oder auch in Form von loser Wolle.

### Beispiel 1:

Aus den Rohstoffen Borax, Dolomit, Kalk, Phonolith, Rohbauxit oder Kaolin, Altglas, ZnO, Na₂SO₄ und Hochofenschlacke wurde eine geeignete Ausgangsmischung (Gemenge) hergestellt und dieses Gemenge bei ca. 1400°C geschmolzen.

Die ermittelten Werte der Temperatur-Viskositäts-Kurve des Glases betrugen dabei wie folgt (nach Lakatos):

| | |
|---|---|
| Log 2.00 (dPas) | 1229°C |
| Log 3.00 (dPas) | 1059°C |
| Log 4.00 (dPas) | 948°C |

Die Analyse der chemischen Zusammensetzung ergab (in Gewichtsprozent) (ICP-OES-Untersuchung nach DIN 51086-2 (AB)):

| | |
|---|---|
| SiO₂ | 49.8% |
| Al₂O₃ | 17.5% |
| CaO | 9.3% |
| MgO | 2.8% |
| Na₂O | 8.3% |
| K₂O | 1.7% |
| Fe₂O₃ | 4.7% |
| TiO₂ | 0.6% |
| SO₃ | 0.2% |
| Mn₂O₃ | 0.1% |
| B₂O₃ | 4.4% |

Zudem wurden noch Anteile von weiteren Oxiden, wie beispielsweise Cr₂O₃, SrO und BaO, mit jeweils weniger als 0,07 Gewichtsprozent analysiert, die als Verunreinigungen der Einsatzrohstoffe in das Ausgangsgemenge gelangten, aber keinerlei Einfluss auf die chemischen und physikalischen Eigenschaften der erfindungsgemässen Mineralfaserzusammensetzung und der daraus hergestellten Dämmstoffprodukte ausübten.

Die Zusammensetzung erfüllte darüber hinaus die Anforderungen an die Temperaturbeständigkeit > 1000°C nach der DIN 4102, Teil 17 und die Anwendungsgrenztemperatur gemäß Bestimmung nach der ISO 8142, der DIN EN 14706 und der DIN EN 14707 liegt bei 500°C.

Die erfindungsgemässe Zusammensetzung ermöglicht zum einen eine ökologische und wirtschaftliche Herstellungsweise und resultiert zum anderen in einer gesundheitlich unbedenklichen aber qualitativ hochstehenden Mineralfaserzusammensetzung.

Die Schmelzung der Rohstoffe kann trotz ökologisch verbesserter Formulierung schnell und bei relativ tiefen Temperaturen erfolgen. Die Zerfaserung kann ebenfalls bei relativ tiefen Temperaturen erfolgen, was zu einer wesentlich höheren Standzeit und Lebensdauer der Zerfaserungseinrichtung von bis zu 8-10 Tagen führt.

### Beispiel 2:

Aus den Rohstoffen Borax, Dolomit, Kalk, Phonolith, Rohbauxit oder Kaolin, Altglas, und Hochofenschlacke wurde eine geeignete Ausgangsmischung (Gemenge) hergestellt und dieses Gemenge bei ca. 1400°C geschmolzen.

Die ermittelten Werte der Temperatur-Viskositäts-Kurve des Glases betrugen dabei wie folgt (nach Lakatos):

| | |
|---|---|
| Log 3.00 (dPas) | 1148°C |
| Log 4.00 (dPas) | 1009°C |
| Log 5.00 (dPas) | 909°C |

Die Analyse der chemischen Zusammensetzung ergab (in Gewichtsprozent) (ICP-OES-Untersuchung nach DIN 51086-2 (AB)):

| | |
|---|---|
| SiO₂ | 44.4% |
| Al₂O₃ | 19.71% |
| CaO | 10.06% |
| MgO | 1.94% |
| Na₂O | 9.36% |
| K₂O | 2.01% |
| Fe₂O₃ | 5.00% |
| TiO₂ | 0.718% |
| SO₃ | 0.065% |
| Mn₂O₃ | 0.163% |
| B₂O₃ | 6.1% |

Zudem wurden noch Anteile von weiteren Oxiden, wie beispielsweise Cr₂O₃, SrO und BaO, mit jeweils weniger als 0,05 Gewichtsprozent analysiert, die als Verunreinigungen der Einsatzrohstoffe in das Ausgangsgemenge gelangten, aber keinerlei Einfluss auf die chemischen und physikalischen Eigenschaften der erfindungsgemässen Mineralfaserzusammensetzung und der daraus hergestellten Dämmstoffprodukte ausübten.

Die Zusammensetzung erfüllte darüber hinaus die Anforderungen an die Temperaturbeständigkeit > 1000°C nach der DIN 4102, Teil 17, und die Anwendungsgrenztemperatur gemäss Bestimmung nach der ISO 8142, der DIN EN 14706 und der DIN EN 14707 liegt bei 500°C.

Die erfindungsgemässe Zusammensetzung ermöglicht zum einen eine ökologische und wirtschaftliche Herstellungsweise und resultiert zum anderen in einer gesundheitlich unbedenklichen aber qualitativ hochstehenden Mineralfaserzusammensetzung.

Die Schmelzung der Rohstoffe kann trotz ökologisch verbesserter Formulierung schnell und bei relativ tiefen Temperaturen erfolgen. Die Zerfaserung kann ebenfalls bei relativ tiefen Temperaturen erfolgen, was zu einer wesentlich höheren Standzeit und Lebensdauer der Zerfaserungseinrichtung von bis zu 12 Tagen führt.

## Patentansprüche

1. Eine fluorarme Mineralfaserzusammensetzung, die zerfaserbar und geeignet ist, sich in einem physiologischen Milieu aufzulösen, **dadurch gekennzeichnet, dass** sie die nachstehend aufgeführte chemische Zusammensetzung mit folgenden Gewichtsprozenten aufweist:
| | |
|---|---|
| SiO₂ | 35-55% |
| Al₂O₃ | 14-28% |
| CaO | 8.5-14% |
| MgO | 1-7% |
| Na₂O | 5-12% |
| K₂O | 1-7% |
| Fe₂O₃ | 3-8% |
| F₂ | 0-2% |
| B₂O₃ | 3-8% |

2. Mineralfaserzusammensetzung nach einem der vorangehenden Ansprüche, **dadurch gekennzeichnet, dass** sie F₂ frei ist.

3. Mineralfaserzusammensetzung nach einem der vorangehenden Ansprüche, **dadurch gekennzeichnet, dass** sie 4 bis 7 Gewichtsprozent B₂O₃ enthält.

4. Mineralfaserzusammensetzung nach einem der vorangehenden Ansprüche, **dadurch gekennzeichnet, dass** sie 9 bis 13 Gewichtsprozent CaO enthält.

5. Mineralfaserzusammensetzung nach einem der vorangehenden Ansprüche, **dadurch gekennzeichnet, dass** sie zusätzlich 0.1 bis 3 Gewichtsprozent TiO₂ enthält.

6. Mineralfaserzusammensetzung nach einem der vorangehenden Ansprüche, **dadurch gekennzeichnet, dass** sie folgende Zusammensetzung in Gewichtsprozenten aufweist:
| | |
|---|---|
| SiO₂ | 45-50% |
| Al₂O₃ | 15-20% |
| CaO | 8.5-12% |
| MgO | 1-4% |
| Na₂O | 7-10% |
| K₂O | 1-3% |
| Fe₂O₃ | 3-7% |
| B₂O₃ | 3-8% |

7. Mineralfaserzusammensetzung nach einem der vorangehenden Ansprüche, **dadurch gekennzeichnet, dass** der Anteil an Alkali- und Erdalkalioxiden wenigstens 18 Gewichtsprozent beträgt.

8. Mineralfaserzusammensetzung nach einem der vorangehenden Ansprüche, **dadurch gekennzeichnet, dass** sie weniger als 0.5 Gewichtsprozent ZnO enthält.

9. Mineralfaserzusammensetzung nach einem der vorangehenden Ansprüche, **dadurch gekennzeichnet, dass** die Rohstoffe wenigstens 5 Gewichtsprozent, vorzugsweise wenigstens 8 Gewichtsprozent Hochofenschlacke enthalten.

10. Mineralfaserzusammensetzung nach einem der vorangehenden Ansprüche, **dadurch gekennzeichnet, dass** wenigstens 95 Gewichtsprozente der Rohstoffe aus natürlich vorkommenden Rohmaterialien sowie Recyclingmaterialien besteht.

11. Mineralfaserzusammensetzung nach einem der vorangehenden Ansprüche, **dadurch gekennzeichnet, dass** kein Natriumsulfat als Läuterungsmittel enthalten ist.

12. Verwendung einer Mineralfaserzusammensetzung nach einem der vorangehenden Ansprüche zur Herstellung von thermischen und/oder akustischen Baumaterialien.
